# EUROPÄISCHE PATENTANMELDUNG

(11) **EP 0 825 379 A1**
(43) Veröffentlichungstag der Anmeldung: **25.02.1998**
(21) Anmeldenummer: 97112598.4
(22) Anmeldetag: 23.07.1997
(51) Int. Cl.: F16L 55/11

(54) **Stopfen zum klemmenden Einführen in ein Rohrende**

(30) Priorität: 22.08.1996 DE 29614585 U
(71) Anmelder: HAGUS C. LUCHTENBERG GmbH & Co. KG, D-42719 Solingen (DE)
(72) Erfinder: Luchtenberg, Curt, 42719 Solingen (DE)
(74) Vertreter: Selting, Günther, Dipl.-Ing.

(57) **Zusammenfassung**

Ein Stopfen (10) ist zum klemmenden Einführen in ein Rohrende vorgesehen, das mit einem Zwei-Komponenten-Kleber in einem in das Rohrende einsteckbaren Stutzen verklebbar ist. Der Stopfen wird von einem Stopfenkörper (10) gebildet, der an seiner einen Stirnseite (16) zwei Einlaß-Öffnungen (19,20) zweier Einlaß-Kanäle (21,22) für jeweils eine Kleber-Komponente aufweist. Die beiden Einlaß-Kanäle (21,22) in dem Stopfenkörper (10) laufen in einem Mischkanal (30) zusammen, der ebenfalls eine an der Stirnseite (16) angeordnete Auslaß-Öffnung (31) aufweist. Der Stopfen gewährleistet einerseits eine gute Durchmischung der beiden Kleber-Komponenten und andererseits eine gute Verteilung des Klebers in den Spalten zwischen dem Stutzen und dem Rohrende.

## Beschreibung

Die Erfindung bezieht sich auf einen Stopfen zum klemmenden Einführen in ein Rohrende, das mit einem Zwei-Komponenten-Kleber mit einem in das Rohrende einsteckbaren Stutzen verklebbar ist.

Beim Verkleben eines Rohrendes mit einem einsteckbaren Stutzen, beispielsweise eines Relingrohres mit einem Relingfuß eines Gepäckträgers für ein Fahrzeug, werden wegen ihrer guten mechanischen Eigenschaften meistens Zwei-Komponenten-Kleber verwendet. Zur Montage werden die beiden Kleber-Komponenten parallel in Schlangenlinien in das Rohrinnere des Rohrendes eingebracht. Dabei werden die beiden Kleber-Komponenten wegen der geringen Topfzeit von ca. 10-15 Sekunden noch nicht miteinander vermischt. Erst beim Einschieben des Stutzens in das Rohrende kommen die beiden Kleber-Komponenten in Kontakt miteinander, ohne sich dabei jedoch gut zu vermischen. In den schlecht oder gar nicht vermischten Bereichen des Klebers findet keine Kleberaushärtung statt, so daß in diesen Bereichen keine Klebewirkung eintritt. Durch das Einschieben des Stutzens wird ein großer Teil des Klebers vor dem Stutzen her in das Rohr geschoben, und nicht in den umlaufenden Spalt zwischen der Außenumfangsfläche des Stutzens und der Innenumfangsfläche des Rohres gedrückt. Die Benetzung dieser Flächen ist häufig unvollständig und daher unzuverlässig. Um dennoch ein Mindestmaß an Verklebung zu erreichen, sind große Klebstoffmengen zu veranschlagen.

Aufgabe der Erfindung ist es, die Verklebung eines Stutzens in einem Rohrende mit einem Zwei-Komponenten-Kleber zu verbessern.

Diese Aufgabe wird erfindungsgemäß mit den Merkmalen des Anspruchs 1 gelöst.

Gemäß der Erfindung ist ein Stopfen zum Einführen in das zu verklebende Rohrende vorgesehen. Der Stopfenkörper weist an seiner einen Stirnseite zwei Einlaß-Öffnungen zweier Einlaß-Kanäle für jeweils eine Kleber-Komponente auf. Die beiden Einlaß-Kanäle laufen in dem Stopfenkörper in einem Mischkanal zusammen, der eine Auslaßöffnung ebenfalls an der einen Stirnseite aufweist.

Bei der Montage wird zunächst der Stopfen mit der Rückseite voran axial in das Rohrende eingesteckt, so daß die eine Stirnseite des eingesteckten Stopfens der Rohröffnung zugewandt ist. Die axiale Einführtiefe des Stopfens ist dabei mindestens geringfügig geringer als die axiale Länge des einzusteckenden Stutzens, so daß der eingesteckte Stutzen an die eine Stirnseite des Stopfens anstößt, bevor der Stutzen vollständig in das Rohrende eingeschoben ist. Vor dem Einstecken des Stutzens werden die beiden Kleber-Komponenten in die Einlaß-Öffnungen injiziert. Die beiden Kleber-Komponenten laufen in dem Mischkanal zusammen und vermischen sich dort. Der vermischte Zwei-Komponenten-Kleber tritt dann an der Auslaß-Öffnung wieder aus dem Stopfen heraus, so daß sich vor der Stirnseite der gut vermischte Zwei-Komponenten-Kleber ansammelt. Wenn die gewünschte Menge vermischten Klebers vor der Stirnseite angesammelt ist, werden die Mittel zum Injizieren des Klebers von den Einführ-Öffnungen abgezogen und aus dem Rohrende herausgezogen. Unmittelbar darauf wird der zu verklebende Stutzen in das Rohrende eingesteckt. Der Stutzen stößt schließlich auf die eine Stirnseite des Stopfens, wodurch der vor der Stirnseite angesammelte vermischte Kleber an der Stirnseite gleichmäßig verteilt wird und in den umlaufenden Spalt zwischen dem Stopfen und dem Rohrende eindringt. Da der Stopfen klemmend in dem Rohrende sitzt, wird der Stopfen erst ab einer bestimmten auf den Stopfen wirkenden Einsteckkraft weiter in das Rohr geschoben.

Durch die der Einsteckkraft entgegenwirkende Klemmkraft des Stopfens wird der vermischte Klebstoff zwischen den Stirnseiten des Stopfens und des Stutzens mit einem entsprechenden Druck in den Spalt zwischen dem Stutzen und dem Rohrende gepreßt. Dadurch wird eine vollständige Benetzung der Außenumfangsfläche des Stutzens und der Innenumfangsfläche des Rohrendes gewährleistet, so daß mit hoher Zuverlässigkeit eine Verklebung auf einer maximalen Klebefläche gewährleistet ist.

Durch die gute Vermischung der beiden Kleber-Komponenten in dem Mischkanal entfaltet der Kleber seine größtmögliche Wirkung. Die benötigte Klebermenge ist im wesentlichen auf das Volumen des Spaltes zwischen dem Stopfen und dem Rohrende begrenzt, wodurch, zumal bei genauer Dosierung, ein geringer Klebstoffverbrauch realisierbar ist. Das Applizieren des Klebers wird durch die Integration eines Mischsystems in den Stopfen vereinfacht und erleichtert.

Vorzugsweise weist der Stopfenkörper an seinem Außenumfang mindestens eine mindestens teilweise umlaufende Dichtlippe auf. Die Dichtlippe gewährleistet eine gute Abdichtung des Stopfens mit der Rohrinnenwand, so daß kein Klebstoff an dem Stopfen vorbei in das Rohrinnere gedrückt werden kann. Die Dichtlippe hat jedoch auch die Funktion, eine definierte axiale Klemmkraft des Stopfens in dem Rohrende zu gewährleisten, und gleichzeitig ein Verkanten des Stopfens zu vermeiden. Dadurch wird der Kleber mit einem definierten Druck in den Spalt gepreßt.

Der Mischkanal kann Mischstege aufweisen, die annähernd senkrecht von der Mischkanalwand abstehen. Die Mischstege verbessern die Vermischung der beiden Kleber-Komponenten in dem Mischkanal. Die Mischstege können dabei schraubenartig angestellt in dem Mischkanal angeordnet sein. Dadurch wird die Klebermasse zu einer schraubenartigen Bewegung durch den Mischkanal gezwungen, wodurch die Vermischung der beiden Kleber-Komponenten verbessert und der Mischungsgrad erhöht wird.

In einer bevorzugten Ausführungsform verläuft der Mischkanal axial in dem Stopfenkörper, wobei der Mischkanal am Umfang des Stopfenkörpers teilweise offen ist. Die Auslaß-Öffnung ist daher ebenfalls am Umfang des Stopfenkörpers angeordnet, so daß bei einer untenliegenden Auslaß-Öffnung der vermischte Kleber am Fußende des Stopfens austritt. Der offene Mischkanal vereinfacht die Herstellung des Stopfens.

Vorzugsweise verjüngen sich die Einlaß-Öffnungen konusförmig zu den Einlaß-Kanälen, so daß ein schnelles Aufstecken von Injektionsröhrchen bei guter Abdichtung zum Injizieren der Kleber-Komponenten möglich ist.

Der Stopfenkörper kann von einer Stirnplatte und einer Rückwandplatte gebildet werden, die durch ein die Kanäle enthaltendes Verbindungsteil geringeren Außenumfanges einstückig miteinander verbunden sind. Dadurch können das Materialvolumen des Stopfenkörpers und damit die Herstellungskosten reduziert werden.

Im folgenden wird unter Bezugnahme auf die Zeichnungen ein Ausführungsbeispiel der Erfindung näher erläutert.

Es zeigen:
- Fig. 1: einen annähernd dreieckigen Stopfen in perspektivischer Ansicht,
- Fig. 2: den Stopfen der Fig. 1 in Unteransicht,
- Fig. 3: einen Stutzen vor einem Rohrende, in das der Stopfen der Fig. 1 eingesetzt ist,
- Fig. 4: das Rohrende der Fig. 3 mit teilweise eingestecktem Stutzen, und
- Fig. 5: das Rohrende der Fig. 3 mit vollständig eingestecktem Stutzen.

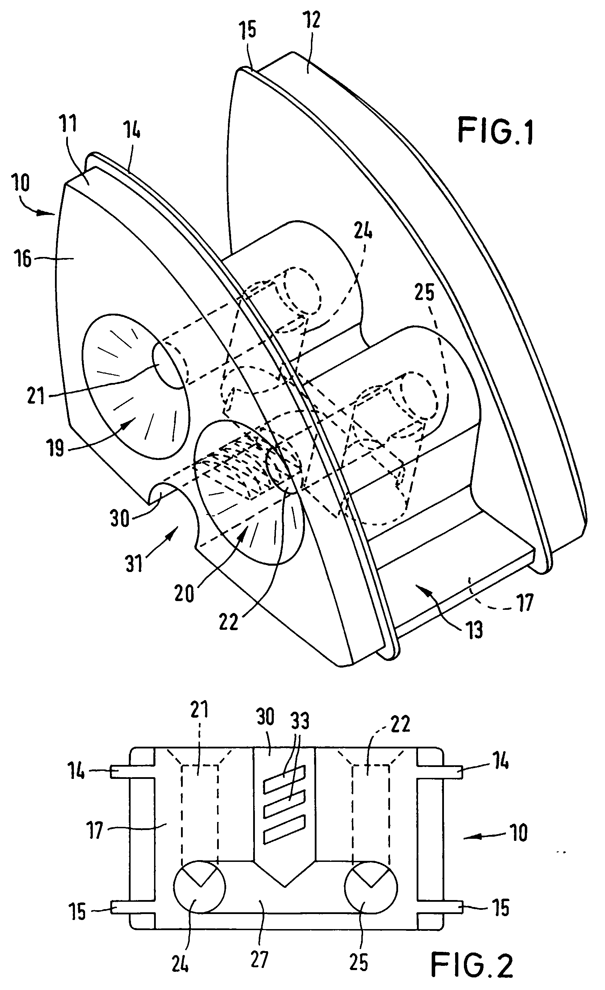

In Figur 1 ist ein Stopfenkörper 10 eines Stopfens dargestellt, der aus einer Stirnplatte 11, einer Rückwandplatte 12 und aus einem die Stirnplatte 11 und die Rückwandplatte 12 einstückig verbindenden Verbindungsteil 13 besteht. Die Stirnplatte 11 und die Rückwandplatte 12 haben ungefähr die Form eines rechtwinkligen Dreiecks und stehen sich deckungsgleich gegenüber. Der Stopfenkörper 10 besteht aus Kunststoff.

Die Stirnplatte 11 und die Rückwandplatte 12 weisen an ihrem Außenumfang jeweils eine Dichtlippe 14,15 auf, die jedoch nicht im Bereich einer Bodenfläche 17 des Stopfenkörpers 10 verläuft, sondern dort unterbrochen ist. Die Bodenfläche 17 ist bis auf Ausnehmungen bzw. Kanäle glatt.

Die Stirnseite des Stopfenkörpers 10 wird von einer Stirnfläche 16 der Stirnplatte 11 gebildet. In der Stirnfläche 16 befinden sich auf gleicher Höhe nebeneinander zwei konisch sich verengende Einlaß-Öffnungen 19,20, an die sich zwei axiale parallele Einlaß-Kanäle 21,22 anschließen. An die hinteren Enden der Einlaß-Kanäle 21,22 schließt sich jeweils ein sich bis zu einer Bodenfläche 17 des Stopfenkörpers 10 erstreckender Vertikalkanal 24,25 an. Die Vertikal-Kanäle 24,25 sind zur Bodenfläche 17 hin offen. Die Enden der Vertikal-Kanäle 24,25 sind durch einen waagerechten Querkanal 27 miteinander verbunden, der quer zur Stopfenlängsachse liegt und ebenfalls zur Bodenfläche 17 hin offen ist. Von dem Querkanal 27 geht genau in der Mitte zwischen den beiden Vertikal-Kanälen 24,25 in axialer Richtung, parallel zu den Einlaß-Kanälen 21,22 ein Mischkanal 30 ab, der an der Stirnfläche 16 der Stirnplatte 11 in der Auslaß-Öffnung 31 endet. Der Mischkanal 30 ist ebenfalls offen zur Bodenfläche 17 des Stopfenkörpers 10 ausgebildet. Der Mischkanal 30 und der Querkanal 27, sind wie in Figur 2 dargestellt, T-förmig zueinander angeordnet und in ihrer gesamten Länge jeweils offen zur Bodenfläche 17.

In dem Mischkanal 30 sind kreissegmentartige Mischstege 33 angeordnet, die senkrecht von der Mischkanalwand abstehen und schraubenartig schräg angestellt angeordnet sind. Die Mischstege 33 sperren nur jeweils einen Teil des freien Querschnitts des Mischkanals 30.

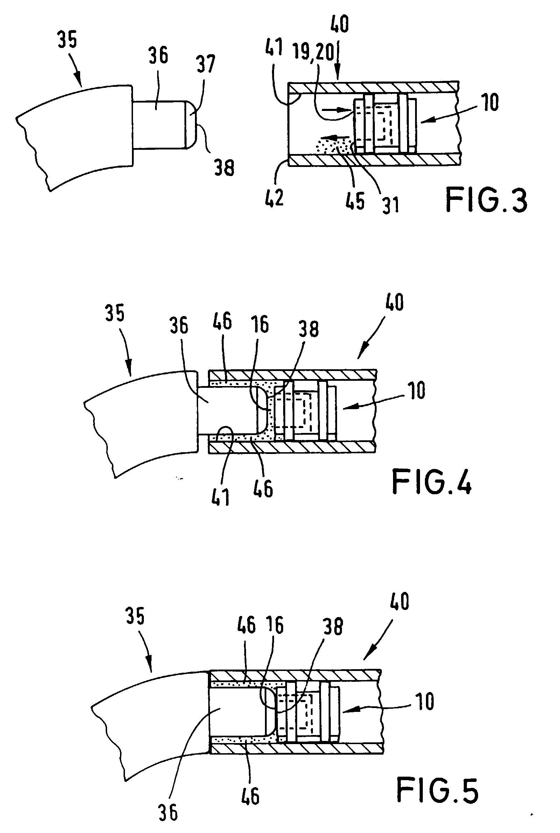

Das Verkleben eines Relingfußes 35 mit einem Relingrohr 40 ist in den Figuren 3 bis 5 dargestellt. Der Relingfuß 35 und das Relingrohr 40 sind Teile eines Gepäckträgers für PKWs. Der Relingfuß 35 weist einen Stutzen 36 mit einer Stirnfläche 38 auf, wobei der Rand 37 des freien Endes des Stutzens 36 abgeschrägt ist. Im vorliegenden Fall ist das Rohr 40, der Relingfuß 35 und der Stopfen 10 im Querschnitt ungefähr dreieckig.

Das Rohr 40 hat ein offenes Rohrende 41, in das der Stutzen 36 unter Belassung eines kleinen Spaltes 46 zwischen dem Außenumfang des Stutzens 36 und dem Innenumfang des Rohrendes 41 durch eine Röhröffnung 42 einsteckbar ist.

Zur Montage des Relingfußes 35 mit dem Relingrohr 40 wird zunächst der Stopfenkörper 10 mit der Rückwandplatte 12 voran durch die Rohröffnung 42 in das Rohrende 41 eingesteckt, so daß die Stirnfläche 16 der Rohröffnung 42 zugewandt ist. Der Stopfenkörper 10 wird dabei so tief in das Rohrende 41 eingeführt, daß die freie Länge des Rohrendes 41, also der Abstand von der Rohröffnung 42 zur Stirnfläche 16 des Stopfenkörpers 1 bis 2 mm geringer ist als die Länge des einzusteckenden Stutzens 36 des Relingfußes 35. Durch das geringe Übermaß am Außenumfang der Dichtlippen 14,15 ist der Stopfenkörper 10 nur gegen eine bestimmte Mindestreibungskraft in dem Rohrende 41 verschiebbar, so daß der Stutzen 10 die Position, in die er mit einem geeigneten Werkzeug eingeschoben wurde, klemmend beibehält.

Nun wird auf die konusförmigen Einlaß-Öffnungen 19,20 jeweils ein Injektions-Röhrchen aufgesetzt, durch das jeweils eine Komponente des Zwei-Komponenten-Klebers in die Einlaß-Kanäle 21,22 injiziert wird. Die zähflüssige Klebermasse wird jeweils durch den Einlaß-Kanal 21,22 in den jeweiligen Vertikal-Kanal 24,25 gedrückt, woraufhin sie durch den Querkanal 27 zur Mitte hin verläuft, wo sich die beiden Kleber-Komponenten treffen und mischen. Anschließend wird der vermischte Kleber durch den Mischkanal 30 zur Stirnfläche 16 hin und aus der Auslaß-Öffnung 31 herausgedrückt. Durch die Mischstege 33 wird in der Klebermasse ein Drall erzeugt, der eine bessere Durchmischung der beiden Kleber-Komponenten gewährleistet. Das Injizieren des Klebers dauert so lange, bis sich vor der Auslaß-Öffnung 31 eine ausreichende Menge gemischter Klebermasse 45 angesammelt hat. Zum Erzeugen dieser ausreichenden Menge gemischter Klebermasse 45 sind nur wenige Sekunden erforderlich, so daß, selbst bei einer kurzen Topfzeit des Klebers von 10 bis 15 Sekunden, noch genügend Zeit verbleibt, den Stutzen 36 in das Rohrende 41 einzustecken.

Nach dem Absetzen und Entfernen der Injektions-Röhrchen wird der Stutzen 36 des Relingfußes 35 durch die Rohröffnung 42 in das Rohrende 41 eingesteckt (Figur 4). Wenn die Stirnfläche 38 des Stutzens 36 die Klebermasse 45 erreicht, wird die Klebermasse 45 in den Spalt 46 zwischen der Außenumfangsfläche des Stutzens 36 und der Innenumfangsfläche des Rohrendes 41 gepreßt und füllt den Spalt 46 blasenfrei aus. Die Gesamtmenge des Klebers ist so gering bemessen, daß keine Klebermasse aus der Rohröffnung 42 entweicht.

Wenn die Stirnfläche 38 des Stutzens 36 an die Stirnfläche 16 des Stopfenkörpers 10 anstößt, wird die Klemmkraft des Stopfenkörpers 10 in dem Rohr 40 überwunden und der Stopfenkörper 10 durch den Stutzen 36 weiter in das Rohr 40 eingeschoben, bis der Stutzen 36 mit seiner gesamten Länge in dem Rohrende 41 steckt. In dieser Endposition härtet der Kleber schließlich aus (Fig. 5).

Das Einstecken des Stutzens 36 kann so schnell erfolgen, daß auch bei sehr kurzen Topfzeiten von 10 bis 15 Sekunden der Stopfenkörper rechtzeitig vor dem Aushärten des Klebers seine Endposition erreicht hat.

Durch Verwendung des Stopfens 10, der einerseits ein Mischsystem für Zwei-Komponenten-Kleber enthält und zum anderen den Kleber in den umlaufenden Spalt 46 zwischen Stutzen 36 und Rohrende 41 zwingt, ist ein Mittel geschaffen, das die Verklebung derartiger Verbindungen mit kleinen Klebermengen, bei guter Vermischung der Kleber-Komponenten und kompletten Ausfüllen der Klebspalte gewährleistet. Die Klebung derartiger Teile wird dadurch zuverlässiger und preiswerter.

## Patentansprüche

1. Stopfen zum klemmenden Einführen in ein Rohrende (41), das mit einem Zwei-Komponenten-Kleber mit einem in das Rohrende (41) einsteckbaren Stutzen (36) verklebbar ist,
mit einem Stopfenkörper (10), der an seiner einen Stirnseite (16) zwei Einlaß-Öffnungen (19,20) zweier Einlaß-Kanäle (21,22) für jeweils eine Kleber-Komponente aufweist,
wobei die beiden Einlaß-Kanäle (21,22) in dem Stopfenkörper (10) in einem Mischkanal (30) zusammenlaufen, der eine ebenfalls an der einen Stirnseite (16) angeordnete Auslaß-Öffnung (31) aufweist.

2. Stopfen nach Anspruch 1, dadurch gekennzeichnet, daß der Stopfenkörper (10) an seinem Außenumfang mindestens eine mindestens teilweise umlaufende Dichtlippe (14,15) aufweist.

3. Stopfen nach Anspruch 1 oder 2, dadurch gekennzeichnet, daß der Mischkanal Mischstege (33) aufweist, die annähernd senkrecht von der Mischkanalwand abstehen.

4. Stopfen nach Anspruch 3, dadurch gekennzeichnet, daß die Mischstege (33) schraubenartig angestellt angeordnet sind.

5. Stopfen nach einem der Ansprüche 1-4, dadurch gekennzeichnet, daß der Mischkanal (30) axial in dem Stopfenkörper (10) verläuft und am Umfang (17) des Stopfenkörpers (10) teilweise offen ist.

6. Stopfen nach Anspruch 5, dadurch gekennzeichnet, daß am Außenumfang des Stopfenkörpers (10) im Bereich des Mischkanals (30) keine Dichtlippen angeordnet sind.

7. Stopfen nach einem der Ansprüche 1-6, dadurch gekennzeichnet, daß die Einlaß-Öffnungen (19,20) sich konusförmig zu den Einlaß-Kanälen (21,22) verjüngen.

8. Stopfen nach einem der Ansprüche 1-7, dadurch gekennzeichnet, daß der Stopfenkörper (10) von einer Stirnplatte (11) und einer Rückwandplatte (12) gebildet wird, die durch ein die Kanäle (21,22,30) enthaltendes Verbindungsteil (13) einstückig miteinander verbunden sind.

9. Stopfen nach Anspruch 8, dadurch gekennzeichnet, daß die Platten (11,12) annähernd dreieckig zum Einführen in ein annähernd dreieckiges Rohrende (41) ausgebildet sind.
